# EUROPÄISCHE PATENTSCHRIFT

(11) **EP 2 988 280 B1**
(45) Veröffentlichungstag und Bekanntmachung des Hinweises auf die Patenterteilung: **22.02.2017**
(21) Anmeldenummer: 15180100.8
(22) Anmeldetag: 07.08.2015
(51) Int. Cl.: G08B 3/10, F24C 7/08, D06F 33/02

(54) **VORRICHTUNG UND VERFAHREN ZUM EINSTELLEN DER LAUTSTÄRKE EINES SIGNALTONS ZUM SIGNALISIEREN EINES ZUSTANDS EINES HAUSHALTSGERÄTS UND HAUSHALTSGERÄT**
DEVICE AND METHOD FOR ADJUSTING THE LOUDNESS OF A SIGNAL TONE FOR SIGNALLING A STATE OF A HOUSEHOLD APPLIANCE AND HOUSEHOLD APPLIANCE
DISPOSITIF ET PROCEDE DE REGLAGE DU VOLUME D'UN BIP SONORE DESTINE A SIGNALER UN ETAT D'UN APPAREIL MENAGER ET APPAREIL MENAGER

(30) Priorität: 19.08.2014 DE 102014111830
(43) Veröffentlichungstag der Anmeldung: 24.02.2016
(73) Patentinhaber: Miele & Cie. KG, 33332 Gütersloh (DE)
(72) Erfinder: Reinke, Nicole, 33611 Bielefeld (DE)

(56) Entgegenhaltungen:
- DE-A1- 10 044 503
- DE-A1- 10 122 402
- DE-U1- 20 005 051

## Beschreibung

Die Erfindung betrifft eine Vorrichtung und ein Verfahren zum Einstellen der Lautstärke eines Signaltons zum Signalisieren eines Zustands eines Haushaltsgeräts sowie ein Haushaltsgerät, wie beispielsweise einen Herd.

Über einen Signalton kann ein Nutzer eines Haushaltsgeräts auf einen Zustand des Haushaltsgeräts aufmerksam gemacht werden. Unter Umständen werden Signaltöne, die den Nutzer beispielsweise auf nächste Schritte im Kochprozess, auf das Ende eines Vorgangs, beispielsweise eines Waschvorgangs einer Waschmaschine, oder schlimmstenfalls auf Probleme des Haushaltsgerätes hinweisen sollen, aufgrund einer zu geringen, bzw. nicht an die Situation angepasste Lautstärke nicht wahrgenommen.

Die DE 100 56 498 A1 befasst sich mit einem Haushaltsgerät mit einem verbesserten Geräuschbild.

Die DE 200 05 051 U1 betrifft einen Elektroherd, der ein Sicherheitssystem aufweist, das aus einem oder mehreren Bewegungssensoren, einer Bewegungsauswerteeinheit, einer Warneinrichtung und/oder einer Sicherheitsschalteinheit besteht. Dieser Elektroherd bietet den Vorteil, dass durch Erkennen der längeren Abwesenheit einer Überwachungsperson und Erfassen von unzulässigen Betriebszuständen Warn- und/oder Abschaltmaßnahmen eingeleitet werden.

Die DE 100 44 503 A1 betrifft ein Verfahren, um die von einem akustischen Signalgeber ausgesendete Intensität eines Nutzsignals in Abhängigkeit von der zeitlich schwankenden Intensität etwaiger Störsignale in der Umgebung des Signalgebers automatisch zu variieren.

Es ist die Aufgabe der vorliegenden Erfindung, eine verbesserte Vorrichtung zum Einstellen der Lautstärke eines Signaltons zum Signalisieren eines Zustands eines Haushaltsgeräts und ein verbessertes Haushaltsgerät zu schaffen.

Erfindungsgemäß wird diese Aufgabe durch eine Vorrichtung zum Einstellen der Lautstärke eines Signaltons zum Signalisieren eines Zustands eines Haushaltsgeräts und ein Haushaltsgerät gemäß den Hauptansprüchen gelöst. Vorteilhafte Ausgestaltungen und Weiterbildungen der Erfindung ergeben sich aus den nachfolgenden Unteransprüchen.

Der beschriebene Ansatz ermöglicht es, dass der Nutzer eines Haushaltsgeräts einen Signalton des Haushaltsgeräts auch dann registrieren kann, wenn sich der Nutzer innerhalb des Raums, in dem sich das Haushaltsgerät befindet, von dem Gerät entfernt oder sich der Nutzer in einem Nebenraum befindet. Gemäß einer Ausführungsform kann der Nutzer einen Signalton des Haushaltsgeräts auch dann sicher registrieren, wenn sich die Umgebungsgeräusche im Umfeld des Haushaltsgeräts verändern.

Dadurch lässt sich ein Komfortmerkmal realisieren, da die Lautstärke des Signaltons von dem Nutzer immer gleich laut wahrgenommen wird. Zum anderen wird die Gefahr verringert, dass ein Signalton vom Nutzer überhört wird.

Eine Vorrichtung zum Einstellen der Lautstärke eines Signaltons zum Signalisieren eines Zustands eines Haushaltsgeräts weist die folgenden Merkmale auf:
eine Schnittstelle zum Empfangen eines Entfernungssignals, das eine Entfernung zwischen einem Nutzer des Haushaltsgeräts und dem Haushaltsgerät repräsentiert; und
eine Einstelleinrichtung, die ausgebildet ist, um einen Lautstärkewert für den Signalton unter Verwendung des Entfernungssignals einzustellen.

Bei der Vorrichtung kann es sich um ein elektrisches Gerät handeln, das in ein Haushaltsgerät integriert werden kann. Der Zustand kann beispielsweise einen Fehlerzustand oder einen Status nach Ablauf eines durchgeführten Prozesses darstellen. Das Entfernungssignal kann ein elektrisches Signal sein. Eine über das Entfernungssignal übertragene Information kann einen Entfernungswert, beispielsweise in Metern, oder einen Entfernungsbereich wie beispielsweise "sehr geringe Entfernung", "geringe Entfernung", "mittlere Entfernung" oder "große Entfernung" angeben. Als Nutzer kann eine von einer Umfelderfassungseinrichtung detektierte Person angenommen werden. Eine über einem Entfernungsschwellenwert liegende Entfernung kann gemäß einer Ausführungsform gleichbedeutend zu einem nicht detektieren Nutzer stehen, beispielsweise wenn sich der Nutzer nicht in dem Raum befindet, in dem sich das Haushaltsgerät befindet. Der Lautstärkewert kann verwendet werden, um eine Lautstärke des Signaltons einzustellen. Der Signalton kann einen sich in der Umgebung des Haushaltsgeräts ausbreitenden Schall darstellen. Die Lautstärke kann angeben, wie laut der Signalton von dem Nutzer wahrgenommen wird.

Gemäß der Erfindung ist die Einstelleinrichtung ausgebildet, um den Lautstärkewert auf einen in einem ersten Lautstärkebereich liegenden Wert einzustellen, wenn das Entfernungssignal eine in einem ersten Entfernungsbereich liegende Entfernung repräsentiert. Entsprechend ist die Einstelleinrichtung ausgebildet, um den Lautstärkewert auf einen in einem zweiten Lautstärkebereich liegenden Wert einzustellen, wenn das Entfernungssignal eine in einem zweiten Entfernungsbereich liegende Entfernung repräsentiert. Dem ersten Lautstärkebereich können beispielsweise Lautstärken zugeordnet sein, die kleiner sind als dem zweiten Lautstärkebereich zugeordnete Lautstärken. Dem ersten Entfernungsbereich können beispielsweise Entfernungen zugeordnet sein, die kleiner als dem zweiten Entfernungsbereich zugeordnete Entfernungen sind. Auf diese Weise kann die Lautstärke mit steigender Entfernung erhöht werden.

Die Vorrichtung kann eine weitere Schnittstelle zum Empfangen eines Geräuschsignals aufweisen. Das Geräuschsignal kann eine Geräuschkulisse in einem Umfeld des Haushaltsgeräts repräsentieren. In diesem Fall kann die Einstelleinrichtung ausgebildet sein, um den Lautstärkewert für den Signalton ferner unter Verwendung des Geräuschsignals einzustellen. Beispielsweise kann das Geräuschsignal einen die Geräuschkulisse charakterisierenden Parameter, beispielsweise eine von dem Nutzer wahrnehmbare Lautstärke der die Geräuschkulisse bildenden Geräusche oder ein Frequenzspektrum der Geräuschkulisse oder einen von einer Umfelderfassungseinrichtung erfassbaren Schallpegel der Geräuschkulisse abbilden. Auf diese Weise kann die Lautstärke nicht nur abhängig von der Entfernung, sondern auch abhängig von der Geräuschkulisse eingestellt werden.

Gemäß einem Ausführungsbeispiel kann die Einstelleinrichtung ausgebildet sein, um den Lautstärkewert auf einen in einem ersten Lautstärkebereich liegenden Wert einzustellen, wenn das das Entfernungssignal eine in einem ersten Entfernungsbereich liegende Entfernung und das Geräuschsignal eine in einem ersten Lautstärkebereich liegende Lautstärke der Geräuschkulisse repräsentiert. Entsprechend kann die Einstelleinrichtung ausgebildet sein, um den Lautstärkewert auf einen in einem zweiten Lautstärkebereich liegenden Wert einzustellen, wenn das Entfernungssignal eine in einem zweiten Entfernungsbereich liegende Entfernung und zusätzlich oder alternativ das Geräuschsignal eine in einem zweiten Lautstärkebereich liegende Lautstärke der Geräuschkulisse repräsentiert. Dem ersten Lautstärkebereich für den Lautstärkewert können beispielsweise Lautstärken zugeordnet sein, die kleiner sind als dem zweiten Lautstärkebereich für den Lautstärkewert zugeordnete Lautstärken. Dem ersten Entfernungsbereich können beispielsweise Entfernungen zugeordnet sein, die kleiner als dem zweiten Entfernungsbereich zugeordnete Entfernungen sind. Dem ersten Lautstärkebereich der Geräuschkulisse können Lautstärken zugeordnet sein, die kleiner sind als dem zweiten Lautstärkebereich der Geräuschkulisse zugeordnete Lautstärken. Auf diese Weise kann die Lautstärke des Signaltons unter Berücksichtigung unterschiedlicher Kombinationen aus Entfernung und Lautstärke der Geräuschkulisse eingestellt werden.

Gemäß einem Ausführungsbeispiel kann die Einstelleinrichtung ausgebildet sein, um den Lautstärkewert zu erhöhen, wenn das Entfernungssignal eine Entfernung repräsentiert, die größer als eine Referenzentfernung ist und/oder das Geräuschsignal eine Lautstärke der Geräuschkulisse repräsentiert, die größer als eine Referenzlautstärke ist. Entsprechend kann die Einstelleinrichtung ausgebildet sein, um den Lautstärkewert zu erniedrigen, wenn das Entfernungssignal eine Entfernung repräsentiert, die kleiner als die Referenzentfernung ist und/oder das Geräuschsignal eine Lautstärke der Geräuschkulisse repräsentiert, die kleiner als eine Referenzlautstärke ist. Auf diese Weise können entgegengesetzt wirkende Effekte der Entfernung und der Geräuschkulisse bei der Einstellung des Lautstärkewerts berücksichtigt werden.

Gemäß einem Ausführungsbeispiel kann die Einstelleinrichtung ausgebildet sein, um einen Frequenzbereich für den Signalton unter Verwendung des Geräuschsignals einzustellen. In diesem Fall kann das Geräuschsignal eine Information über ein Frequenzspektrum der Geräuschkulisse umfassen. Der Frequenzbereich des Signaltons kann so gewählt werden, dass er außerhalb von einen starken Schallpegel aufweisenden Frequenzbereichen der Geräuschkulisse liegt. Dadurch kann die Hörbarkeit des Signaltons für den Nutzer verbessert werden.

Die Vorrichtung kann eine Umfelderfassungseinrichtung aufweisen, die ausgebildet ist, die Entfernung zwischen dem Nutzer und dem Haushaltsgerät zu erfassen und das die Entfernung repräsentierende Entfernungssignal an die Schnittstelle bereitzustellen. Beispielsweise kann die Umfelderfassungseinrichtung ausgebildet sein, um die Entfernung unter Verwendung eines dem Nutzer zuordenbaren elektrischen Felds, einer dem Nutzer zuordenbaren elektromagnetischen Strahlung, beispielsweise im Infrarotbereich oder im sichtbaren Bereich, und/oder dem Nutzer zuordenbare Schallwellen zu erfassen. Lediglich beispielhaft kann die Umfelderfassungseinrichtung dazu einen Annäherungssensor, einen Infratorsensor und/oder eine Kamera umfassen.

Ferner kann die Vorrichtung eine weitere Umfelderfassungseinrichtung aufweisen, die ausgebildet ist, um die Geräuschkulisse in dem Umfeld des Haushaltsgeräts zu erfassen und das die Geräuschkulisse repräsentierende Geräuschsignal an die weitere Schnittstelle bereitzustellen. Beispielsweise kann die weitere Umfelderfassungseinrichtung ein Mikrofon umfassen. Bei dem Geräuschsignal kann es sich um ein von dem Mikrofon ausgegebenes elektrisches Signal handeln. Auch kann es sich bei dem Geräuschsignal um ein ausgewertetes Signal handeln, das von einer dem Mikrofon nachgeschalteten Auswerteeinrichtung ausgegeben wird. Eine solche Auswerteeinrichtung kann ausgebildet sein, um das von dem Mikrofon ausgegebene Signal auszuwerten, beispielsweise um die Lautstärke oder ein Frequenzspektrum der Geräuschkulisse zu bestimmen.

Ferner kann die Vorrichtung einen Lautsprecher aufweisen, der ausgebildet ist, um den Signalton mit einer dem Lautstärkewert entsprechenden Lautstärke auszugeben.

Vorteilhafterweise kann die genannte Vorrichtung in ein Haushaltsgerät integriert werden.

Ein Verfahren zum Einstellen der Lautstärke eines Signaltons zum Signalisieren eines Zustands eines Haushaltsgeräts umfasst die folgenden Schritte:
Empfangen eines Entfernungssignals, das eine Entfernung zwischen einem Nutzer des Haushaltsgeräts und dem Haushaltsgerät repräsentiert; und
Einstellen eines Lautstärkewerts für den Signalton unter Verwendung des Entfernungssignals.

Die Schritte des Verfahrens können vorteilhaft im Zusammenhang mit Einrichtungen der beschriebenen Vorrichtung umgesetzt werden.

Ein Ausführungsbeispiel der Erfindung ist in den Zeichnungen rein schematisch dargestellt und wird nachfolgend näher beschrieben. Es zeigt
- Figur 1: eine Darstellung eines Haushaltsgeräts;
- Figur 2: eine Darstellung eines Haushaltsgeräts mit einer Vorrichtung zum Einstellen der Lautstärke eines Signaltons;
- Figur 3: eine Darstellung einer Vorrichtung zum Einstellen der Lautstärke eines Signaltons;
- Figuren 4 bis 6: Darstellungen zum Einstellen der Lautstärke eines Signaltons; und
- Figur 7: ein Ablaufdiagramm eines Verfahrens zum Einstellen der Lautstärke eines Signaltons.

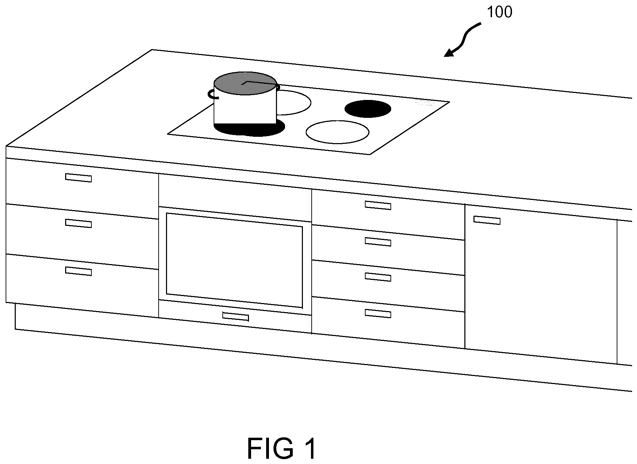

Fig. 1 zeigt eine Darstellung eines Haushaltsgeräts 100 gemäß einem Ausführungsbeispiel der vorliegenden Erfindung. Das Haushaltsgerät 100 stellt eine Kombination aus einem Herd und einen Backofen dar, die in eine Küchenzeile eingebaut ist. Der Herd weist ein Kochfeld auf, das in eine Arbeitsplatte der Küchenzeile integriert ist. Der Backofen ist unter dem Herd und zwischen Schubladen angeordnet.

Das in Fig. 1 gezeigte Haushaltsgerät 100 ist lediglich beispielhaft gewählt. Der beschriebene Ansatz eignet sich in entsprechender Weise zur Anwendung im Zusammenhang mit anderen Haushaltsgeräten, wie beispielsweise einer Waschmaschine, einem Wäschetrockner oder eine Geschirrspülmaschine.

Das gezeigte Haushaltsgerät 100 ist ausgebildet um einen Signalton auszugeben, um einen Nutzer des Haushaltsgeräts 100 beispielsweise auf einen Zustand des Haushaltsgeräts 100 aufmerksam zu machen. Zum Einstellen einer Lautstärke des Signaltons weist das Haushaltsgerät 100 eine Vorrichtung zum Einstellen der Lautstärke des Signaltons auf.

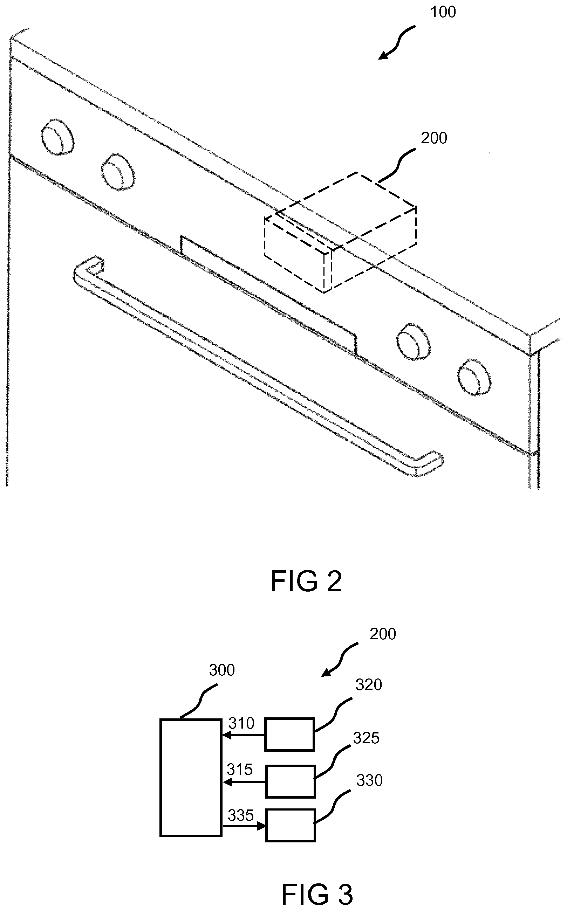

Fig. 2 zeigt eine Darstellung eines Haushaltsgeräts 100 mit einer Vorrichtung 200 zum Einstellen der Lautstärke eines Signaltons gemäß einem Ausführungsbeispiel der vorliegenden Erfindung. Bei dem Haushaltsgerät 100 kann es sich um das anhand von Fig. 1 beschriebene Haushaltsgerät 100 handeln. Die Vorrichtung 200 ist als ein elektrisches Gerät in dem Haushaltsgerät 100 integriert.

Fig. 3 zeigt eine Darstellung einer Vorrichtung 200 zum Einstellen der Lautstärke eines Signaltons gemäß einem Ausführungsbeispiel der vorliegenden Erfindung. Bei der Vorrichtung 200 kann es sich um die in Fig. 2 gezeigte Vorrichtung handeln.

Die Vorrichtung 200 weist eine Einstelleinrichtung 300 auf, die ausgebildet ist, um einen Lautstärkewert für einen von dem Haushaltsgerät oder von der Vorrichtung 200 ausgebbaren Signalton einzustellen. Dabei ist die Einstelleinrichtung 300 ausgebildet, um den Lautstärkewert abhängig von einer Entfernung zwischen einem Nutzer des Haushaltsgeräts und dem Haushaltsgerät einzustellen. Dies wird dadurch realisiert, dass die die Einstelleinrichtung 300 ausgebildet ist, um ein die Entfernung darstellendes Entfernungssignal 310 über eine Schnittstelle zu empfangen und zur Einstellung des Lautstärkewertes zu verwenden.

Gemäß einem Ausführungsbeispiel ist die Vorrichtung 200 ausgebildet, um den Lautstärkewert ferner unter Verwendung eines Geräuschsignals 315 einzustellen, das eine Geräuschkulisse in einem Umfeld des Haushaltsgeräts repräsentiert. Dazu ist die Vorrichtung 200 ausgebildet, um das Geräuschsignal 315 über eine weitere Schnittstelle, beispielsweise eine weitere Schnittstelle der Einstelleinrichtung 300 zu empfangen.

Gemäß einem Ausführungsbeispiel ist die Vorrichtung 200 ausgebildet, um das Entfernungssignal 310 von einer Umfelderfassungseinrichtung 320 des Haushaltsgeräts und das optionale Geräuschsignal 315 von einer weiteren Umfelderfassungseinrichtung 325 des Haushaltsgeräts zu empfangen. Die Umfelderfassungseinrichtung 325 kann beispielsweise ein Mikrofon sein, das die Geräuschkulisse im Umfeld des Haushaltsgeräts erfassen kann. Die Umfelderfassungseinrichtung 320 kann einen Sensor umfassen, der ausgebildet ist, um den Nutzer im Umfeld des Haushaltsgeräts und insbesondere eine Entfernung zwischen der Person und dem Haushaltsgerät zu erfassen, sofern sich der Nutzer im Umfeld des Haushaltgeräts befindet.

Der Signalton wird von einem Lautsprecher 330 ausgegeben, der Teil der Vorrichtung 200 oder Teil des Haushaltsgeräts sein kann. Zur Einstellung der Lautstärke des Signaltons ist die Einstellungseinrichtung 300 ausgebildet um ein Signal 335 an den Lautsprecher 330 bereitzustellen, das den eingestellten Lautstärkewert oder ein unter Verwendung des eingestellten Lautstärkewerts bestimmtes Steuersignal zum Ansteuern des Lautsprechers 330 darstellt.

Gemäß einem Ausführungsbeispiel sind Entfernungsbereiche für die Entfernung zwischen dem Haushaltsgerät und dem Nutzer vorgegeben und das Entfernungssignal 310 signalisiert das Vorliegen eines dieser Entfernungsbereiche. Entsprechend können Lautstärkebereiche für die Lautstärke der Geräuschkulisse vorgegeben sein und das Geräuschsignal 315 signalisiert das Vorliegen eines dieser Lautstärkebereiche. In diesem Fall kann die Einstelleinrichtung 300 ausgebildet sein, um den Lautstärkewert für den Signalton auf einen Wert einzustellen, der der Kombination aus den signalisierten Bereichen entspricht. Dazu kann eine Nachschlagtabelle verwendet werden, in der mögliche Kombinationen aus Entfernungsbereichen und Lautstärkebereichen hinterlegt sein können.

Gemäß einem Ausführungsbeispiel ist die Einstelleinrichtung 300 ausgebildet, das Entfernungssignal 310 mit zumindest einem Entfernungsschwellenwert und das Geräuschsignal 315 mit zumindest einem Geräuschschwellenwert zu vergleichen und den Lautstärkewert abhängig von den Vergleichsergebnissen einzustellen. Beispielsweise kann die Einstelleinrichtung 300 ausgebildet sein, um den Lautstärkewert zu erhöhen, wenn das Entfernungssignal eine Entfernung repräsentiert, die größer als eine Referenzentfernung ist. Ebenso kann die Einstelleinrichtung 300 ausgebildet sein, um den Lautstärkewert zu erhöhen, wenn das Geräuschsignal eine Lautstärke der Geräuschkulisse repräsentiert, die größer als eine Referenzlautstärke ist. Entsprechend kann die Einstelleinrichtung 300 ausgebildet sein, um den Lautstärkewert zu erniedrigen, wenn das Entfernungssignal eine Entfernung repräsentiert, die kleiner als die Referenzentfernung ist. Ebenso kann die Einstelleinrichtung 300 ausgebildet sein, um den Lautstärkewert zu zu erniedrigen, wenn das Geräuschsignal eine Lautstärke der Geräuschkulisse repräsentiert, die kleiner als die Referenzlautstärke ist.

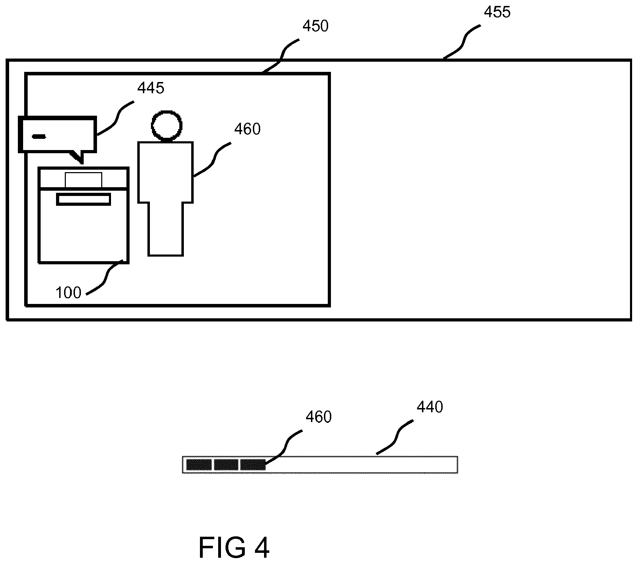

Die Figuren 4 bis 6 zeigen Darstellungen zum Einstellen der Lautstärke 440 eines Signaltons 445 gemäß Ausführungsbeispielen der vorliegenden Erfindung. Gezeigt ist jeweils ein Haushaltsgerät 100, das in einem Raum 450 angeordnet ist. Bei dem Haushaltsgerät 100 kann es sich um das anhand von Fig. 1 beschriebene Haushaltsgerät handlen. An den Raum 450 grenzt ein Nebenraum 455 an. Ein Nutzer 460 des Haushaltsgeräts 100 befindet sich entweder in dem Raum 450 oder in dem Nebenraum 455. Das Haushaltsgerät 100 weist einen Lautsprecher zum Ausgeben des Signaltons 445 und eine Vorrichtung zum Einstellen einer Lautstärke des Signaltons 445 auf. Eine entsprechende Vorrichtung ist beispielsweise anhand der Figur 3 beschrieben. Die Lautstärke 440 wird durch einen auf einer Skala aufgetragenen Lautstärkewert 470 dargestellt.

Fig. 4 zeigt ein Ausführungsbeispiel einer Einstellung der Lautstärke 440 des Signaltons 445 bei normaler Umgebungslautstärke. Der Nutzer 460 befindet sich dabei in einer sehr geringen Entfernung zu dem Haushaltsgerät 100. Aufgrund der normalen Umgebungslautstärke wird ein relativ niedriger Lautstärkewert 460 für den Signalton 445 eingestellt. Beispielsweise wird der Lautstärkewert 440 auf 30% einer maximal möglichen Lautstärke 440 eingestellt. Gemäß einem Ausführungsbeispiel werden über diese Einstellung Referenzwerte für die Lautstärke des Signaltons, für die Entfernung und gegebenenfalls für die Lautstärke der Geräuschkulisse eingestellt.

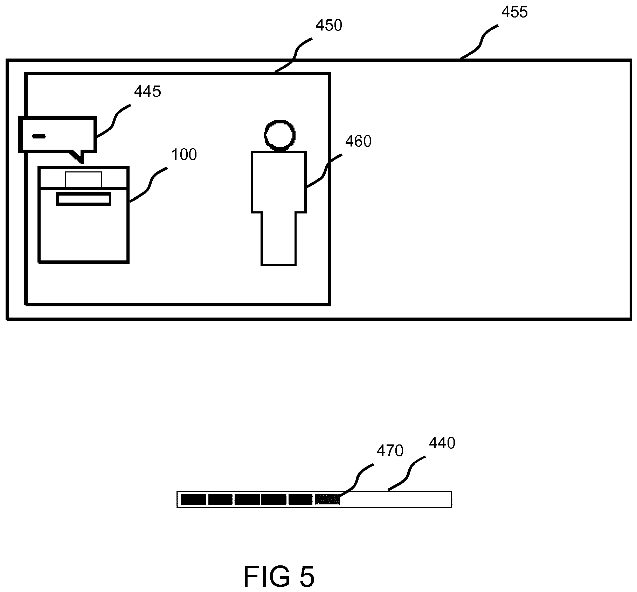

Fig. 5 zeigt ein Ausführungsbeispiel einer automatischen Anpassung der Lautstärke 440 des Signaltons 445 im Kochprozess. Der Nutzer 460 befindet sich dabei in einer geringen bis mittleren Entfernung zu dem Haushaltsgerät 100, jedoch innerhalb des Raums 460. Aufgrund der hohen Umgebungslautstärke, beispielsweise verursacht durch Braten oder Geräusche einer Dunstabzugshaube wird ein mittlerer Lautstärkewert 460 für den Signalton 445 eingestellt. Beispielsweise wird der Lautstärkewert 440 auf 60% einer maximal möglichen Lautstärke 440 eingestellt. Beispielsweise kann der Lautstärkewert 460 je nach Entfernung aus einem mittlere Werte umfassenden Lautstärkebereich ausgewählt werden.

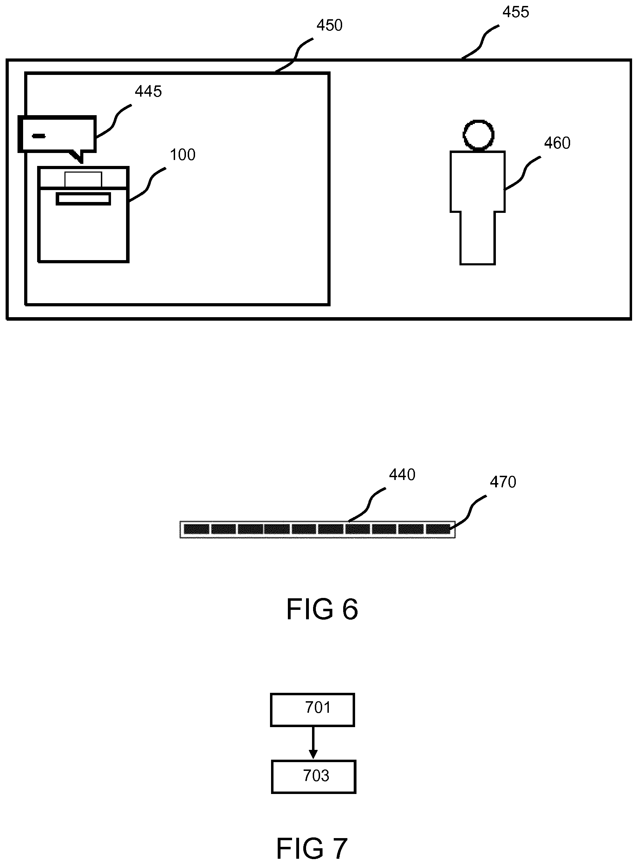

Fig. 6 zeigt ein Ausführungsbeispiel einer automatischen Anpassung der Lautstärke 440 des Signaltons 445, wenn sich der Nutzer 460 nicht in demselben Raum 450 wie das signalauslösende Hausgerät 100 befindet, sondern sich beispielsweise in dem Nebenraum 455 befindet. Beispielsweise kann der Nutzer 460 sich im Kochprozess befinden. Der Nutzer 460 befindet sich somit in einer großen Entfernung zu dem Haushaltsgerät 100, die auch angenommen werden kann, wenn der Nutzer 460 nicht von einer Umfelderfassungseinrichtung erfasst werden kann. Die Umgebungslautstärke kann in Lautstärkebereichen von niedrig bis hoch liegen. Aufgrund der großen Entfernung des Nutzers 460 wird unabhängig von der Umgebungslautstärke ein maximal möglicher Lautstärkewert 460 für den Signalton 445 eingestellt.

Fig. 7 zeigt ein Ablaufdiagramm eines Verfahrens zum Einstellen der Lautstärke eines Signaltons gemäß einem Ausführungsbeispiel der vorliegenden Erfindung. Das Verfahren kann beispielsweise unter Verwendung von Einrichtungen der anhand von Fig. 3 beschriebenen Vorrichtung umgesetzt werden.

Das Verfahren umfasst einen Schritt 701, in dem ein Entfernungssignal empfangen wird, das eine Entfernung zwischen einem Nutzer des Haushaltsgeräts und dem Haushaltsgerät abbildet. In einem nachfolgenden Schritt 703 wird ein Lautstärkewert für den Signalton unter Verwendung des Entfernungssignals eingestellt.

Im Folgenden werden Ausführungsbeispiele der vorliegenden Erfindung anhand der vorangegangenen Figuren detailliert beschrieben.

Wird die Lautstärke der Töne 445 eines Haushaltsgerätes 100 auf eine Referenzlautstärke eingestellt, wie es anhand von Fig. 4 beschrieben ist, befindet sich der Nutzer 460 direkt am Gerät 100. Zusätzlich unterscheiden sich die Umgebungsgeräusche während der Einstellung der Lautstärke 440 der akustischen Signale 445 des Haushaltsgerätes 100 zu denen während der Benutzung im Kochprozess.

Im Moment des Auslösen eines Signaltons 445, beispielsweise in Form eines Hinweis-, Warn- oder Fehlertons, treten andere und wahrscheinlich weitere Geräusche auf, wie die eigenen Geräusche des Gerätes 100, das Rauschen einer Dunstabzugshaube, Brat- und Werkzeuggeräusche, etc.. Es liegt somit eine veränderte Umgebungslautstärke vor. Aus diesem Grund ist die Lautstärke 440 des Signaltons 445 oftmals zu leise eingestellt, so dass die akustischen Signale 445 des Haushaltsgerätes 100 leicht überhört werden können.

Jedoch werden akustische Signale 445 nicht nur durch sich verändernde Umgebungsgeräusche nicht wahrgenommen, sondern auch, weil der Nutzer 460 sich von dem Gerät 100 wegbewegt - innerhalb und außerhalb des Raums 450. Es liegt somit eine veränderte Position des Nutzers 460 vor.

Mittels einer Umfelderfassungseinrichtung 325, beispielsweise in Form eines Mikrofones, kann die Lautstärke und Frequenz der Umgebung gemessen und mit der Lautstärke und gegebenenfalls Frequenz während der Referenzeinstellung des Signaltons 445 abgeglichen und entsprechend angepasst werden.

Zusätzlich kann mittels einer Umfelderfassungseinrichtung 320, beispielsweise in Form eines Annäherungssensors, eines Infrarotsensors oder einer Kamera, oder einer Kombination zumindest zweier dieser Geräte detektiert werden, ob sich der Nutzer 460 im Raum 450 befindet und mit welcher Entfernung zum Haushaltsgerät 100. Dementsprechend wird die Lautstärke 440 des Signaltons 445 ebenfalls erhöht.

Somit können Umfelderfassungseinrichtungen 320, 325, die ein Mikrofon, einen Annäherungssensor oder Infrarotsensor oder eine Kamera oder eine Kombination davon für eine sichere Detektion des Nutzers 460 verwendet werden, um die Ausgabe zumindest eines Signaltons 445 über einen Lautsprecher 330 für die Ausgabe von Signaltönen 445 einzustellen.

## Patentansprüche

1. Vorrichtung (200) zum Einstellen der Lautstärke (440) eines Signaltons (445) zum Signalisieren eines Zustands eines Haushaltsgeräts (100), wobei die Vorrichtung (200) die folgenden Merkmale aufweist:
eine Schnittstelle zum Empfangen eines Entfernungssignals (310), das eine Entfernung zwischen einem Nutzer (460) des Haushaltsgeräts und dem Haushaltsgerät (100) repräsentiert; und
eine Einstelleinrichtung (300), die ausgebildet ist, um einen Lautstärkewert (470) für den Signalton (445) unter Verwendung des Entfernungssignals (310) einzustellen
**dadurch gekennzeichnet, dass**
die Einstelleinrichtung (300) ausgebildet ist, um den Lautstärkewert (470) auf einen in einem ersten Lautstärkebereich liegenden Wert einzustellen, wenn das Entfernungssignal (310) eine in einem ersten Entfernungsbereich liegende Entfernung repräsentiert, und ausgebildet ist, um den Lautstärkewert (470) auf einen in einem zweiten Lautstärkebereich liegenden Wert einzustellen, wenn das Entfernungssignal (310) eine in einem zweiten Entfernungsbereich liegende Entfernung repräsentiert.

2. Vorrichtung (200) gemäß einem der vorangegangenen Ansprüche, mit einer weiteren Schnittstelle zum Empfangen eines Geräuschsignals (315), das eine Geräuschkulisse in einem Umfeld des Haushaltsgeräts repräsentiert, wobei die Einstelleinrichtung (300) ausgebildet ist, um den Lautstärkewert (470) für den Signalton (445) ferner unter Verwendung des Geräuschsignals (315) einzustellen.

3. Vorrichtung (200) gemäß Anspruch 2, bei der die Einstelleinrichtung (300) ausgebildet ist, um den Lautstärkewert (470) auf einen in einem ersten Lautstärkebereich liegenden Wert einzustellen, wenn das das Entfernungssignal (310) eine in einem ersten Entfernungsbereich liegende Entfernung und das Geräuschsignal (315) eine in einem ersten Lautstärkebereich liegende Lautstärke der Geräuschkulisse repräsentiert, und ausgebildet ist, um den Lautstärkewert (470) auf einen in einem zweiten Lautstärkebereich liegenden Wert einzustellen, wenn das Entfernungssignal (310) eine in einem zweiten Entfernungsbereich liegende Entfernung und/oder das Geräuschsignal (315) eine in einem zweiten Lautstärkebereich liegende Lautstärke der Geräuschkulisse repräsentiert.

4. Vorrichtung (200) gemäß Anspruch 2 oder 3, bei der die Einstelleinrichtung (300) ausgebildet ist, um den Lautstärkewert (470) zu erhöhen, wenn das Entfernungssignal (310) eine Entfernung repräsentiert, die größer als eine Referenzentfernung ist und/oder das Geräuschsignal (315) eine Lautstärke der Geräuschkulisse repräsentiert, die größer als eine Referenzlautstärke ist, und/oder bei der die Einstelleinrichtung (300) ausgebildet ist, um den Lautstärkewert (470) zu erniedrigen, wenn das Entfernungssignal (310) eine Entfernung repräsentiert, die kleiner als die Referenzentfernung ist und/oder das Geräuschsignal (315) eine Lautstärke der Geräuschkulisse repräsentiert, die kleiner als die Referenzlautstärke ist.

5. Vorrichtung (200) gemäß einem der Ansprüche Anspruch 2 bis 4, bei der die Einstelleinrichtung (300) ausgebildet ist, um einen Frequenzbereich für den Signalton (445) unter Verwendung des Geräuschsignals (315) einzustellen.

6. Vorrichtung (200) gemäß einem der vorangegangenen Ansprüche, mit einer Umfelderfassungseinrichtung (320), die ausgebildet ist, die Entfernung zwischen dem Nutzer (460) und dem Haushaltsgerät (100) zu erfassen und das die Entfernung repräsentierende Entfernungssignal (310) an die Schnittstelle bereitzustellen.

7. Vorrichtung (200) gemäß Anspruch 2, mit einer weiteren Umfelderfassungseinrichtung (325), die ausgebildet ist, um die Geräuschkulisse in dem Umfeld des Haushaltsgeräts (100) zu erfassen und das die Geräuschkulisse repräsentierende Geräuschsignal (315) an die weitere Schnittstelle bereitzustellen.

8. Vorrichtung (200) gemäß einem der vorangegangenen Ansprüche, mit einem Lautsprecher (330), der ausgebildet ist, um den Signalton (445) mit einer dem Lautstärkewert (470) entsprechenden Lautstärke (440) auszugeben.

9. Haushaltsgerät (100), umfassend eine Vorrichtung (200) zum Einstellen der Lautstärke (440) eines Signaltons (445) zum Signalisieren eines Zustands des Haushaltsgeräts (100) gemäß einem der vorangegangenen Ansprüche.

## Claims

1. Apparatus (200) for adjusting the volume (440) of an acoustic signal (445) in order to signal a state of a domestic appliance (100), the apparatus (200) comprising the following features:
an interface for receiving a distance signal (310) which represents the distance between a user (460) of the domestic appliance and the domestic appliance (100); and
an adjustment device (300) which is designed to adjust a volume value (470) for the acoustic signal (445) by using the distance signal (310),
**characterised in that**
the adjustment device (300) is designed to adjust the volume value (470) to a value within a first volume range when the distance signal (310) represents a distance within a first distance range, and is designed to adjust the volume value (470) to a value within a second volume range when the distance signal (310) represents a distance within a second distance range.

2. Apparatus (200) according to any of the preceding claims, comprising an additional interface for receiving a noise signal (315) that represents background noise in the surroundings of the domestic appliance, wherein the adjustment device (300) is designed to adjust the volume value (470) for the acoustic signal (445) by also using the noise signal (315).

3. Apparatus (200) according to claim 2, wherein the adjustment device (300) is designed to adjust the volume value (470) to a value within a first volume range when the distance signal (310) represents a distance within a first distance range and the noise signal (315) represents a volume of the background noise within a first volume range, and is designed to adjust the volume value (470) to a value within a second volume range when the distance signal (310) represents a distance within a second distance range and/or the noise signal (315) represents a volume of the background noise within a second volume range.

4. Apparatus (200) according to either claim 2 or claim 3, wherein the adjustment device (300) is designed to increase the volume value (470) when the distance signal (310) represents a distance that is greater than a reference distance and/or the noise signal (315) represents a volume of the background noise that is greater than a reference volume, and/or wherein the adjustment device (300) is designed to decrease the volume value (470) when the distance signal (310) represents a distance that is smaller than the reference distance and/or the noise signal (315) represents a volume of the background noise that is smaller than the reference volume.

5. Apparatus (200) according to any of claims 2 to 4, wherein the adjustment device (300) is designed to adjust a frequency range for the acoustic signal (445) by using the noise signal (315).

6. Apparatus (200) according to any of the preceding claims, comprising a device (320) for detecting the surroundings which is designed to detect the distance between the user (460) and the domestic appliance (100) and to provide the interface with the distance signal (310) representing the distance.

7. Apparatus (200) according to claim 2, comprising an additional device (325) for detecting the surroundings which is designed to detect the background noise in the surroundings of the domestic appliance (100) and to provide the additional interface with the noise signal (315) representing the background noise.

8. Apparatus (200) according to any of the preceding claims, comprising a speaker (330) which is designed to emit the acoustic signal (445) at a volume (440) corresponding to the volume value (470).

9. Domestic appliance (100) comprising an apparatus (200) for adjusting the volume (440) of an acoustic signal (445) in order to signal a state of the domestic appliance (100) according to any of the preceding claims.

## Revendications

1. Dispositif (200) destiné au réglage du volume sonore (440) d'une tonalité de sonnerie (445) en vue de la signalisation d'un état d'un appareil ménager (100), dans lequel le dispositif (200) présente les caractéristiques suivantes :
- une interface destinée à la réception d'un signal de distance (310) qui représente une distance entre un utilisateur (460) de l'appareil ménager, d'une part, et l'appareil ménager (100), d'autre part ; et
- un mécanisme de réglage (300) qui est conçu en vue de régler une valeur du volume sonore (470) pour la tonalité de sonnerie (445) en employant le signal de distance (310),
**caractérisé en ce que**
le mécanisme de réglage (300) est conçu en vue de régler la valeur du volume sonore (470) sur une valeur se trouvant dans une première plage de volume sonore, quand le signal de distance (310) représente une distance se trouvant dans une première plage de distance et lequel mécanisme de réglage est conçu en vue de régler la valeur du volume sonore (470) sur une valeur se trouvant dans une deuxième plage de volume sonore, quand le signal de distance (310) représente une distance se trouvant dans une deuxième plage de distance.

2. Dispositif (200) selon l'une des revendications précédentes, avec une autre interface destinée à la réception d'un signal de bruit (315) qui représente un bruit de fond dans un environnement de l'appareil ménager, dans lequel le mécanisme de réglage (300) est conçu en vue de régler la valeur du volume sonore (470) pour la tonalité de sonnerie (445) en employant en outre le signal de bruit (315).

3. Dispositif (200) selon la revendication 2, pour lequel le mécanisme de réglage (300) est conçu en vue de régler la valeur du volume sonore (470) sur une valeur se trouvant dans une première plage de volume sonore, quand le signal de distance (310) représente une distance se trouvant dans une première plage de distance et quand le signal de bruit (315) représente un volume sonore du bruit de fond se trouvant dans une première plage de volume sonore, et lequel mécanisme de réglage est conçu en vue de régler la valeur du volume sonore (470) sur une valeur se trouvant dans une deuxième plage de volume sonore, quand le signal de distance (310) représente une distance se trouvant dans une deuxième plage de distance et/ou quand le signal de bruit (315) représente un volume sonore de bruit de fond se trouvant dans une deuxième plage de volume sonore.

4. Dispositif (200) selon la revendication 2 ou 3, pour lequel le mécanisme de réglage (300) est conçu en vue d'augmenter la valeur du volume sonore (470), quand le signal de distance (310) représente une distance qui est supérieure à une distance de référence et/ou quand le signal de bruit (315) représente un volume sonore du bruit de fond qui est supérieur à un volume sonore de référence et/ou pour lequel le mécanisme de réglage (300) est conçu en vue de diminuer la valeur du volume sonore (470), quand le signal de distance (310) représente une distance qui est inférieure à la distance de référence et/ou quand le signal de bruit (315) représente un volume sonore du bruit de fond qui est inférieur au volume sonore de référence.

5. Dispositif (200) selon l'une des revendications 2 à 4, pour lequel le mécanisme de réglage (300) est conçu en vue de régler une gamme de fréquences pour la tonalité de sonnerie (445) en employant le signal de bruit (315).

6. Dispositif (200) selon l'une des revendications précédentes, avec un mécanisme de reconnaissance de l'environnement (320) qui est conçu en vue de reconnaître la distance entre l'utilisateur (460) et l'appareil ménager (100), d'une part, et de fournir à l'interface, d'autre part, le signal de distance (310), lequel représente la distance.

7. Dispositif (200) selon la revendication 2, avec un autre mécanisme de reconnaissance de l'environnement (325) qui est conçu en vue de reconnaître le bruit de fond dans l'environnement de l'appareil ménager (100), d'une part, et de fournir à l'autre interface, d'autre part, le signal de bruit (315), lequel représente le bruit de fond.

8. Dispositif (200) selon l'une des revendications précédentes, avec un haut-parleur (330) qui est conçu en vue d'émettre la tonalité de sonnerie (445) avec un volume sonore (440) correspondant à la valeur du volume sonore (470).

9. Appareil ménager (100) comprenant un dispositif (200) destiné au réglage du volume sonore (440) d'une tonalité de sonnerie (445) en vue de la signalisation d'un état de l'appareil ménager (100) conformément à l'une des revendications précédentes.
